# EUROPEAN PATENT SPECIFICATION

(11) **EP 0 557 910 B1**
(45) Date of publication and mention of the grant of the patent: **29.12.1999**
(21) Application number: 93102689.2
(22) Date of filing: 19.02.1993
(51) Int. Cl.: H04L 12/56, H04Q 11/04

(54) **Cell exchanging apparatus**
Zellenvermittlungseinrichtung
Commutateur de cellules

(30) Priority: 24.02.1992 JP 3618992
(43) Date of publication of application: 01.09.1993
(73) Proprietor: MITSUBISHI DENKI KABUSHIKI KAISHA, Tokyo 100 (JP)
(72) Inventor: Tsuzuki, Munenori, c/o Mitsubishi Denki K. K., Kamakura-shi, Kanagawa 247 (JP); Yamanaka, Hideaki, c/o Mitsubishi Denki K. K., Kamakura-shi, Kanagawa 247 (JP); Saito, Hirotaka, c/o Mitsubishi Denki K. K., Kamakura-shi, Kanagawa 247 (JP); Yamada, Hirotoshi, c/o Mitsubishi Denki K. K., Kamakura-shi, Kanagawa 247 (JP); Oshima, Kazuyoshi, c/o Mitsubishi Denki K. K., Kamakura-shi, Kanagawa 247 (JP)
(74) Representative: Pfenning, Meinig & Partner

(56) References cited:
- EP-A- 0 410 139
- EP-A- 0 455 827
- PATENT ABSTRACTS OF JAPAN vol. 014, no. 067 (E-0885) 7 February 1990 & JP-A-01 286 645 (NTT) 17 November 1989

## Description

### Field of the Invention

The present invention relates to an asynchronous transfer mode (ATM) cell exchanging apparatus according to the pre-characterizing part of claim 1 and claim 2, respectively.

### Description of the Prior Art

A number of ATM techniques and architectures have been proposed to switch voice data, video data, and other kinds of data. The ATM techniques are designed for use in a digital network such as an integrated services digital network (ISDN). ATM techniques improve the utilization efficiency of transmission in switching by statistical multiplexing of fixed length packets of the data, known as cells, on a broad band transmission line. The architectures for practising ATM techniques include switching architectures for switching cells through the network.

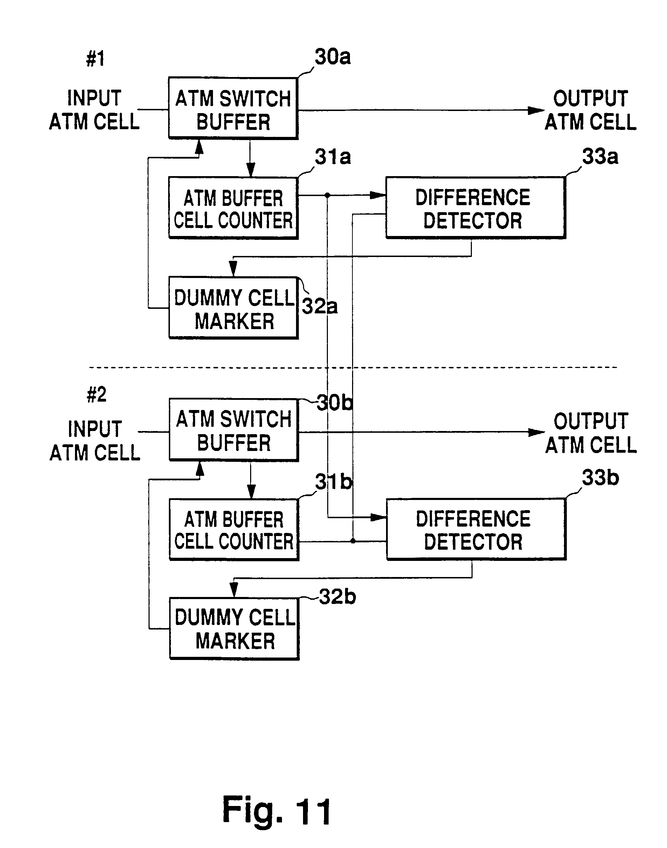

Fig. 11 is a block diagram showing the change-over system of an ATM switch, which is described in Japanese Patent Lain-Open No. Hei 3-26038. The ATM switch is used to direct cells through the ATM network. As shown in Fig. 11, this ATM switch is provided with two ATM switch systems #1 and #2, which have the same structure. Redundant switch systems are provided to enhance the robustness of the network.

Identical ATM cells are input in parallel to the respective switch systems #1 and #2. These ATM cells are input in parallel to ATM switch buffers 30a and 30b of the ATM switch systems #1 and #2, and each cell is output to an external system after a delay. In order to monitor the number of cells which are stored in the ATM switch buffers 30a and 30b, ATM buffer cell counters 31a and 31b are provided. Each of the ATM buffer cell counters 31a and 32b increments its count value each time an ATM cell is input to the corresponding ATM switch buffer 30a and 30b, and decrements its count value each time an ATM cell is output from the corresponding buffer. In this way, the ATM buffer cell counters 31a and 31b always monitor the number of cells that are stored in the respective ATM switch buffers 30a and 30b.

Systems #1 and #2 are provided with respective difference detectors 33a and 33b, for comparing the count values of the ATM buffer cell counters 31a and 31b. Systems #1 and #2 are also provided with respective dummy cell markers 32a and 32b for writing dummy cells into the ATM switch buffers 30a and 30b, in accordance with the control signals sent from the difference detectors 33a and 33b.

A plurality of ATM switches are disposed at intersections (cross points) of input and output paths so as to form a crossbar type ATM exchanging apparatus.

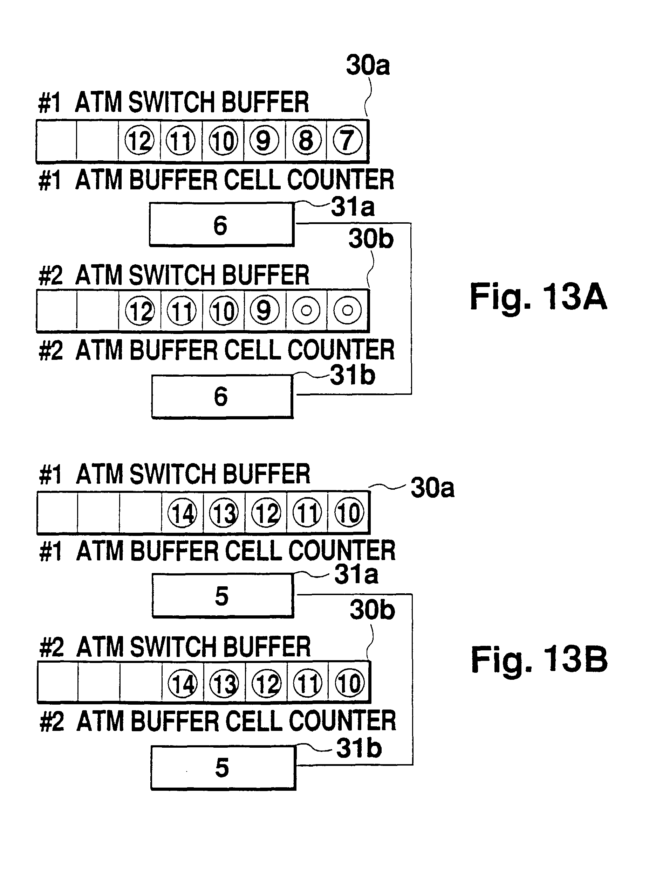

The operation of the conventional ATM switch systems of Fig. 11 will be explained below with reference to Figs. 12A-12C, 13A, and 13B. In Figs. 12A-12C, 13A, and 13B, switch system #1 (see Fig. 11) functions as the "currently used" system, whereas switch system #2 (see Fig. 11) functions as a "spare" system. In this illustrative case, each of the ATM switch buffers 30a and 30b stores the same cells "1"-"2", as shown in Fig. 12A. Accordingly, each of the ATM buffer cell counters 31a and 31b has a counter value of "4".

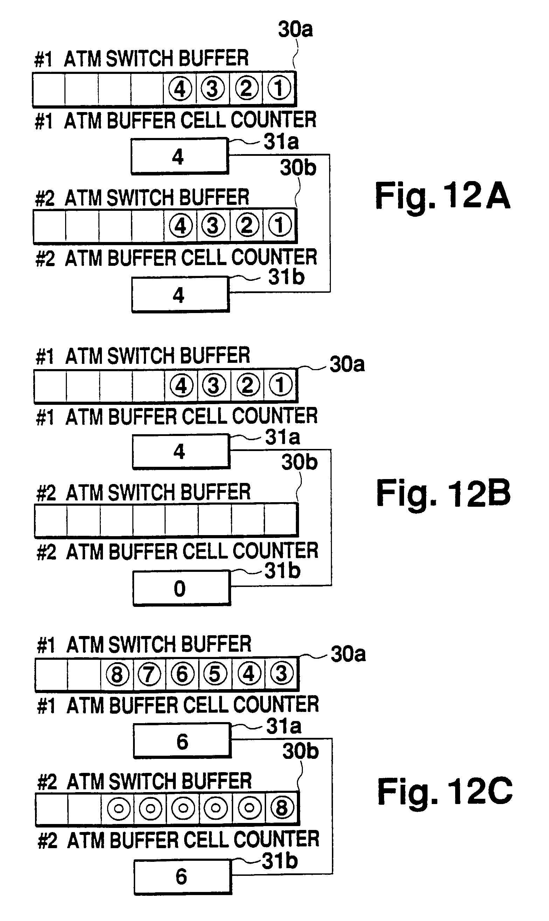

If ATM switch buffer 30b of switch system #2 ceases operating due to some problem, the contents of the ATM switch buffer 30b are lost, and the count value of the ATM buffer cell counter 31b is reset to "0", as shown in Fig. 12B. Even if the ATM switch of system #2 becomes operational again, a certain amount of time must elapse before switch system #2 may assume the "currently-used" role previously served by switch system #1.

When switch system #2 assumes the "currently-used" role, difference detector 33b (Fig. 11) detects the difference between the count values of the ATM buffer cell counters 31a and 31b. Difference detector 33b causes the dummy cell marker 32b to generate dummy cells (indicated by "0" entries) which are stored in the ATM switch buffer 30b until the difference in count values is eliminated. Dummy cells are, thus, stored until there is no difference between the count values of the ATM buffer cell counters 31a an 31b, and hence the number of cells stored in the ATM switch buffer 30a equals the number of cells stored in the ATM switch buffer 30b.

For example, when cells "3"-"8" are stored in the ATM switch buffer 30a of switch system #1 and only the cell "8" is stored in the ATM switch buffer 30b of switch system #2, as shown in Fig. 12C, the difference between the numbers of cells stored in the respective switch buffers is "5". Hence, five dummy cells (indicated as "0") are generated and stored in the ATM switch buffer 30b. Both ATM buffer cell counters 31a and 31b then have a count value of "6".

In this state, switch system #2 begins to operate in the same way as switch system #1. Fig. 13A shows a subsequent state in which the leading four cells in buffers 30a and 30b have been output and in which four new cells have been supplied to the ATM switch buffers. Fig. 13B shows the state in which two additional cells (six cells in total) have been supplied to the ATM switch buffers 30a and 30b and the leading three cells have been removed from the buffers 30a and 30b. In the state shown in Fig. 13A, since the dummy cells remain, switch system #2 cannot function as a "spare" system. In other words, switch system #2 cannot be called upon to assume the role previously served by switch system #1. However, in the state shown in Fig. 13B, since no dummy cells remain, switch system #2 can be changed over to assume the role of system #1.

With the conventional cell exchanging system having the foregoing configuration, one control unit is shared by two switch systems so as to control which of a plurality of ATM systems for outputting cells to the same output path should output a cell. In such a case, the status of cells stored in the switch buffers are the same for the two switch systems. There is however a problem that the control units cannot be doubled.

On the other hand, when a separate control unit is provided for each of the switch systems 1 and 2, there might be a case in which the switch buffers for the ATM switch systems 1 and 2 might store different numbers of cells. In such a case, the systems 1 and 2 cannot be selected optionally.

EP-A-0 455 827 discloses a change over method for a cell exchange system comprising doubled ATM switches for exchanging ATM cells, which can change over the ATM switches correctly without the lack or duplication of the cells. On the input sides of the ATM switches bits are inserted into the headers of the cells to be inputted into the ATM switches. These bits indicate whether the respective cells are provided for an active switching system or a standby switching system. On the output sides of the ATM switches these bits in the headers of the cells outputted from the respective switches determine whether a cell is selected for being sent to a transmission path, i.e. only the cells provided for the active switching system are transmitted.

Further, EP-A-0 410 139 describes an ATM switching system including two identical ATM switches. Each of the ATM switches comprises a switch buffer, a cell counter indicating the number of cells in the switch buffer, and a difference calculator for calculating the difference between the number of cells in the two switch buffers when one of the ATM switches is changed from an out-of-service state to a slave mode while the other ATM switch operates in a master mode. Each of the ATM switches further includes a dummy cell generator for generating a number of dummy cells which corresponds to the difference calculated by the difference calculator. The generated dummy cells are then written into the switch buffer in the slave mode. When all of the dummy cells have been output from the switch buffer, the two switches are synchronized with each other.

### SUMMARY OF THE INVENTION

It is the object of the present invention to provide a cell exchanging apparatus as known from EP-A-0 455 827 which can perform change-over of the switches without duplication of cells and omission of the cells by using a simple mechanism.

This object according to the invention is solved with an asynchronous transfer mode cell exchanging apparatus comprising the features of claim 1 and claim 2, respectively. A preferred embodiment of the apparatus is defined in claim 3.

In accordance with an embodiment of the present invention, an asynchronous transfer mode (ATM) cell exchanging apparatus distributes input cells to corresponding cell output lines. Each input cell includes a data portion and a header portion. The header portion includes address information that is used to direct the cell to its destination. The cell exchanging apparatus includes a first cell switch for distributing the input cells to a first set of switch output lines in accordance with address information of the header portions of the input cells. The cell exchanging apparatus also includes a second redundant cell switch for distributing the input cells to a second set of switch output lines in accordance with address information of the header portions of the input cells. Both the first and second cell switches generate idle cells when they input cells.

The cell exchanging apparatus further includes a selection mechanism for determining which of the first and second sets of switch output lines is a currently selected set of switch output lines that provides cells to the cell output lines. The selection mechanism is switchable between selecting the first set of switch output lines and the second set of switch output lines. The selection mechanism includes a confirmation mechanism for confirming that idle cells are output on each of the currently selected and spare sets of switch output lines before switching selection by the selection mechanism of cells from the currently selected set of switch output lines to the other set of switch output lines.

The first cell switch and/or the second cell switch may be formed by a plurality of unit switches. In addition, the first and second cell switches may include arbitration logic for arbitrating competing requests to output a cell over a switch output line. In accordance with one embodiment, each of the unit switches is provided with an output buffer that temporarily stores the cells to the output. The unit switches request permission to output a cell when a cell is stored in its output buffer. In this embodiment, the arbitration circuit grants permission to one of the unit switches which are connected to a single switch output line and which are requesting permission to output a cell so that only the cell in the unit switch which is granted permission is output to the switch output line. The arbitration circuit instructs one of the unit switches to output an idle cell when no unit switch requests permission to output a cell.

According to another embodiment of the invention, there is provided a cell exchanging apparatus which comprises a first cell switch which distributes cells input through input lines by destinations and a second cell switch which has the same configuration as the first cell switch; one cell switch operates as an active system and the other operates as a standby system. Cells input to the cell exchanging apparatus are fed through input selectors only to the cell switch operating as the active system, and output selectors output cells output from the cell switch as the active system to an external system as output of the cell exchanging apparatus.

To change over the cell switches as the active and standby systems, first the destinations of input cells are changed by the input selectors to the cell switch in the standby mode from the active cell switch. After a check is made to ensure that the active cell switch outputs no significant cells, the cell switch in the standby mode changes to a new active cell switch which then starts to send cells to the output selectors.

Thus, the cell switches as the active and standby systems can be changed over.

### BRIEF DESCRIPTION OF THE DRAWINGS

The above and other objects, features and advantages of the present invention will become clear from the following description of the preferred embodiments thereof, taken in conjunction with the accompany drawings in which:
Fig. 1 is a schematic diagram of a digital transmission system in which the ATM cell exchanging apparatus of the present invention may be used;
Fig. 2 is a block diagram of the structure of an ATM cell exchanging apparatus ;
Fig. 3 is a block diagram of the selector 5a shown in Fig. 2;
Fig. 4 is a logic diagram of the selection circuit 8 of Fig. 3;
Fig. 5 is a timing diagram showing the input and output timings for the apparatus shown in Fig. 2;
Fig. 6 is another timing diagram showing the input and output timings for the apparatus shown in Fig. 2;
Figs. 7A and 7B are diagrams showing the output timing for the apparatus shown in Fig. 2;
Fig. 8 is a block diagram showing the configuration of a cell exchanging apparatus according to a first embodiment of the invention;
Fig. 9 is a block diagram showing the configuration of a cell exchanging apparatus according to a second embodiment of the invention;
Fig. 10 is a drawing for illustrating movement of cells in a buffer when cell switches of the cell exchanging apparatus shown in Fig. 9 are changed over;
Fig. 11 is a block diagram of an example of the structure of a conventional ATM switch;
Figs. 12A-12C are timing diagrams for explaining the operation of a conventional ATM switch; and
Figs. 13A and 13B are timing diagrams for explaining the operation of a conventional ATM switch.

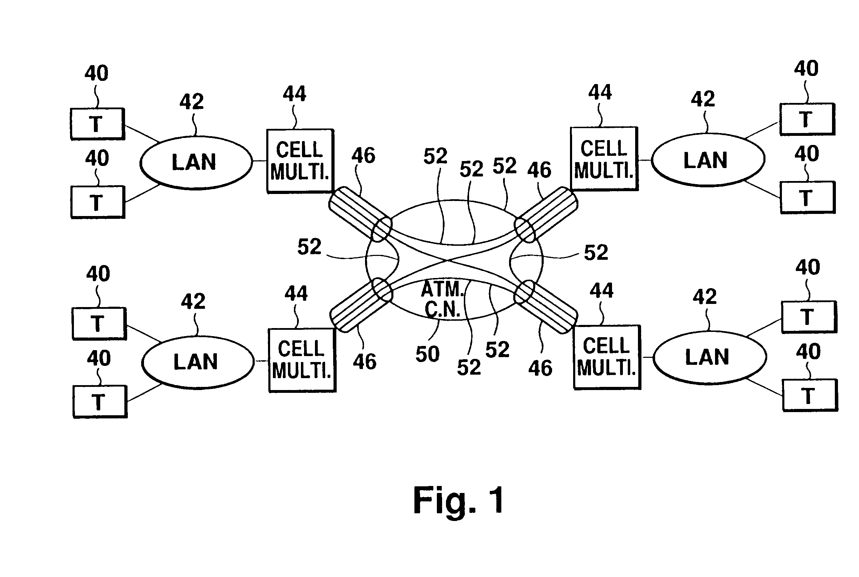

Fig. 1 shows a digital transmission system in which the cell exchanging apparatus of the present invention may be used. The digital transmission system of Fig. 1 includes an ATM communication network 50. The system also includes terminals 40 that serve as the source and destination of cells that are passed across the network. The terminals are connected to local area networks (LANs) 42, which are, in turn, connected to cell multiplexing devices 44. The cell multiplexing devices 44 serve as interfaces between LANs 42 and the ATM communication network 50. Cells originating from a terminal pass through a LAN 42 to a cell multiplexing device 44, wherein the cells are multiplexed across the ATM communication network 50. Each of the cell multiplexing devices 44 is connected to a number of logical channels 46. The cell multiplexer decides which channel the cells are transmitted across. In making this decision, the cell multiplexing device selects a particular channel 52 that leads to the destination terminal. The cells are demultiplexed by a cell multiplexer device 44 that is coupled to a LAN 42 leading to the destination terminal 40. The demultiplexed cells are then transmitted over the LAN 42 to the destination terminal 40.

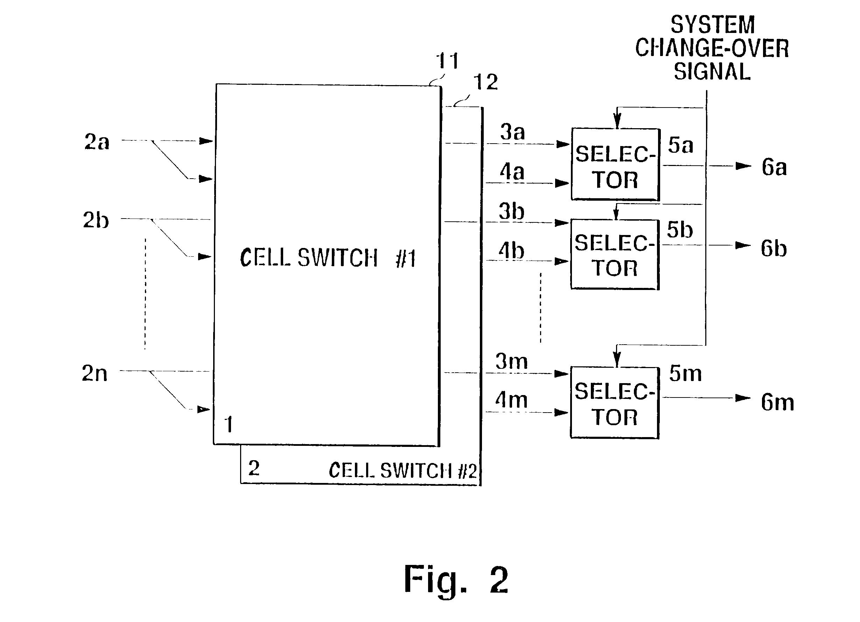

The ATM communication network 50 must include a number of switches to properly route cells across the network. The ATM network 50 is designed to operate at very high speeds (e.g., line bit-rates of 155 Mbps). As such, the switching must be done efficiently to maintain a high throughput. A cell exchanging apparatus that performs switching without omitting cells or repeating cells is shown in Fig. 2. The ATM cell exchanging apparatus of Fig. 2 is provided with a cell switch 11 for receiving cells from a plurality of input lines 2a to 2n (where n is a positive integer) And for outputting the received cells to a plurality of output lines 3a to 3n (where n is a positive integer). A suitable cell switch architecture is described in Kuwahara et al., "A Shared Buffer Memory Switch for an ATM Exchange", Proc. of IEEE, 1989. The ATM cell switching apparatus also includes an additional cell switch 12 that serves as a "spare cell" switch. This cell switch 12 has the same structure as cell switch 11 but has separate output lines 4a to 4m. Selectors 5a to 5m are coupled to the output lines 3a-3m and 4a-4m of the respective switches 11 and 12. The selectors 5a-5m select either the output lines 3a to 3m of cell switch 11 or the output lines 4a to 4m of cell switch 12. The selectors 5a to 5m output cells received from the selected lines through lines 6a to 6m. The selectors 5a to 5m make their choice of lines based on the system change-over signal. This signal will be described in more detail below.

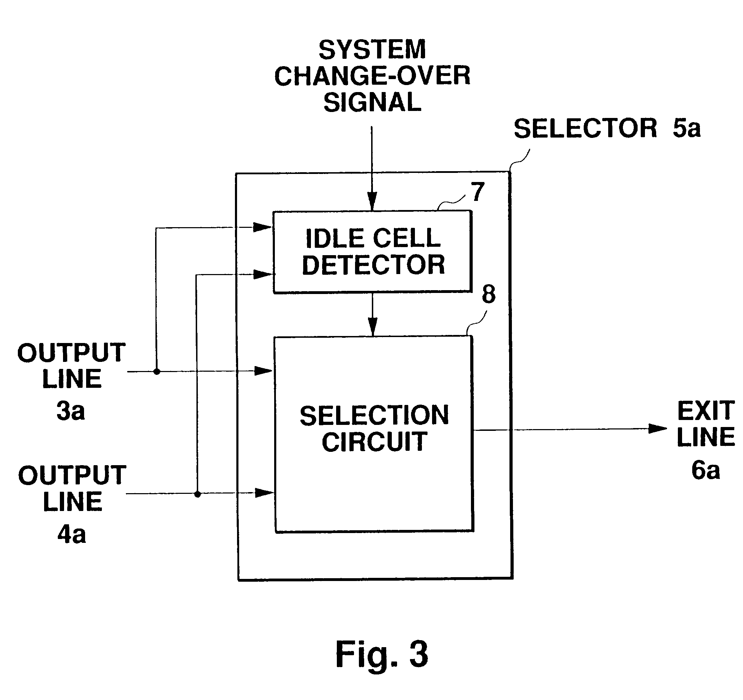

Fig. 3 is a block diagram of the structure of selector 5a. Each of the other selectors 5b-5m has an identical construction. As shown in Fig. 3, the selector 5a includes an idle cell detector 7, for judging whether or not an idle or idle cell is output on the output lines 3a and 4a. When the cell switch 11 or 12 (Fig. 1) has no cell to output to one of its output lines, an idle cell is output in place of a normal cell. Each cell is typically 53 bytes in length, with 48 bytes of data and 5 bytes of header information. When the cell switch 11 or 12 generates an idle cell, it includes a 2-byte flag in the header information that identifies the cell as an idle cell. The idle cell detector 7 (Fig. 2) constantly monitors the output lines 3a to 4a of the two systems to determine whether any idle cells are output on lines 3a and 4a. The idle cell detector checks for the idle cell flag on incoming cells to determine whether the incoming cells are idle cells.

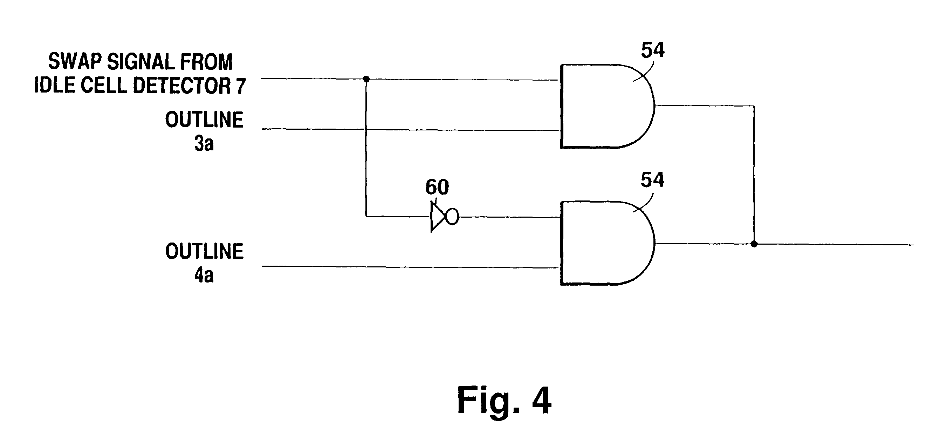

The selector 5a further includes a selection circuit 8, for selecting either output line 3a or 4a and outputting the cell on the selected output line to the line 6a. Fig. 4 provides a more detailed view of one implementation of the selection circuit 8. The selection circuit includes two AND gates 54 and 56 and an inverter 60. If the system change-over signal is generated by an external system in response to a switch failure or any other event, the idle cell detector 7 (Fig. 2) swaps the cell switch from which it selects cells by switching the selection switch 8. Those skilled in the art will know of suitable mechanisms for generating such a system change-over signal. During normal operation, a swap signal sent from the idle cell detector 7 to the selection circuit 8 is high. As such, the cells output on line 3a (see Fig. 4) are passed through AND gate 54. In contrast, the cells output on line 4a are stopped by AND gate 56 because inverter 60 inverts the logically high output of the swap signal. However, when the system change-over signal is generated, the idle cell detector forces the swap signal to a logically low state so that the AND gate 54 stops the cells output on line 3a, whereas AND gate 56 allows the cells output on line 4a to pass.

The switching is performed only after detector 7 (Fig. 3) confirms that an idle cell is output to the output lines 3a and 4a of both systems. The systems are not switched immediately after the system change-over signal is generated but is switched only after an idle cell is output from both cell switches 11 and 12 to the respective output lines. It is, thus, possible to switch the systems by a very simple circuit structure which neither duplicates nor misses any cells, hence enhancing the throughput of the network.

The operation of this apparatus will now be explained in detail. In Fig. 2, cell switches 11 and 12 are shown for illustrative purposes as having four input lines 2a to 2d and four output lines 3a to 3d. It is assumed that each cell has a fixed length, and that cells reach the input lines 2a to 2d at substantially random times, provided that the time interval between cells is equivalent to an integral multiple of the length of a cell. In other words, it is assumed that the input phases of the cells are normalized before they reach input lines 2a to 2d and that the cells are input from all the lines in the same phase.

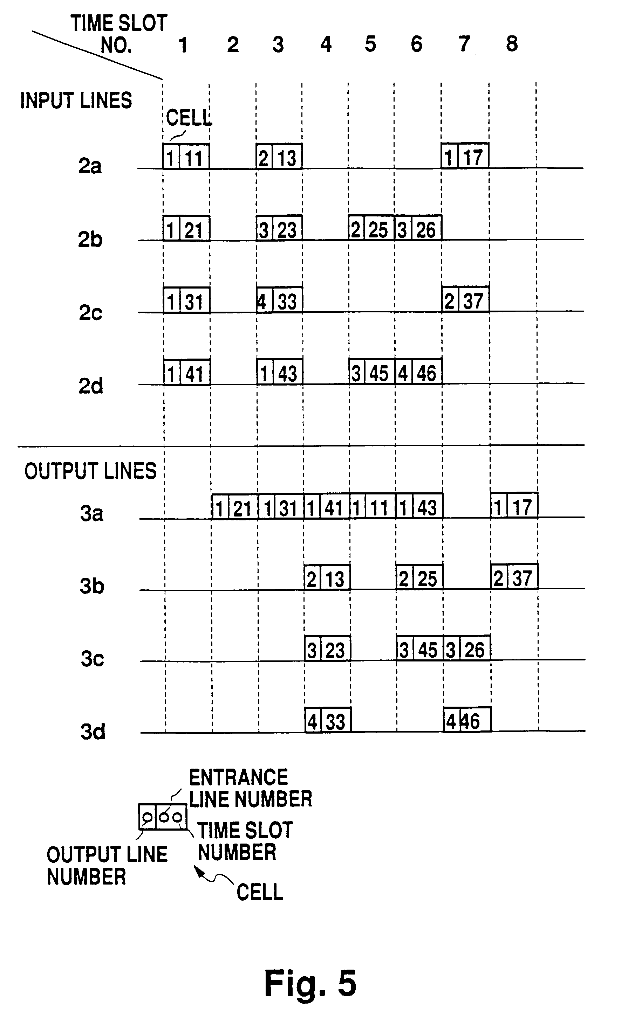

The operation of the cell switch 11 will now be explained. Fig.5 is a timing chart for signals which are input on the input lines 2a to 2d and output to the output lines 3a to 3d. The numerals provided at the top of the chart represent time slot numbers. Only one cell is input to one input line for each time slot. The numeral at the left portion of each cell represents an output line number, the numeral at the middle portion of each cell represents an input line number, and the number at the right portion of each cell represents a time slot number. The output line numbers 1 to 4 correspond to the output lines 3a to 3d, respectively, and the input line numbers 1 to 4 correspond to the input lines 2a to 2d, respectively. The time slot numbers each represents the number of the time slot in which the cell was input. The time slots showing no cells are the time slots in which no cell was received or in which an idle cell has been output.

The cells which are input to the cell switch 11 are distributed to the specified output line numbers and output during the next time slot, as a general rule. If a plurality of cells which are to be delivered to the same output line are input during the same time slot, the cells are output one after another in a predetermined order. The order may be determined in various ways. In this illustrative case, a method is employed which outputs the cells according to their input line numbers in a circular order of 1 → 2 → 3 → 4 →. However, this method for ordering the output of the cells is merely illustrative and other approaches may be equally viable.

In the illustrative case of Fig. 5, during time slot 1, cells to be delivered to the first output line (output line 3a) arrive at the four input lines 2a to 2d. Therefore, the cells input from the input line numbers 2, 3, 4, and 1 are output during time slots 2 to 5, respectively, in consecutive order (namely, 2b → 2c → 2d → 2a). During time slot 3, a cell is received on input line 2d. This cell is output at time slot 6 on output line 3a.

Since both of the cell switches 11 and 12 operate as described above, the order of outputting a plurality of cells which are to be delivered to the same address and which are input during the same time slot is sometimes different, depending upon the internal state of the cell switch. However, there is no time interval between the outputs of the cells. In other words, these plurality of cells are continuously output, and no idle cell is inserted between the cells.

In this apparatus, when a plurality of cells are to be output to the same output line, they are output in a circular order, as described above. The order of outputting the cells is not critical. In an extreme case, the cells may be output at random.

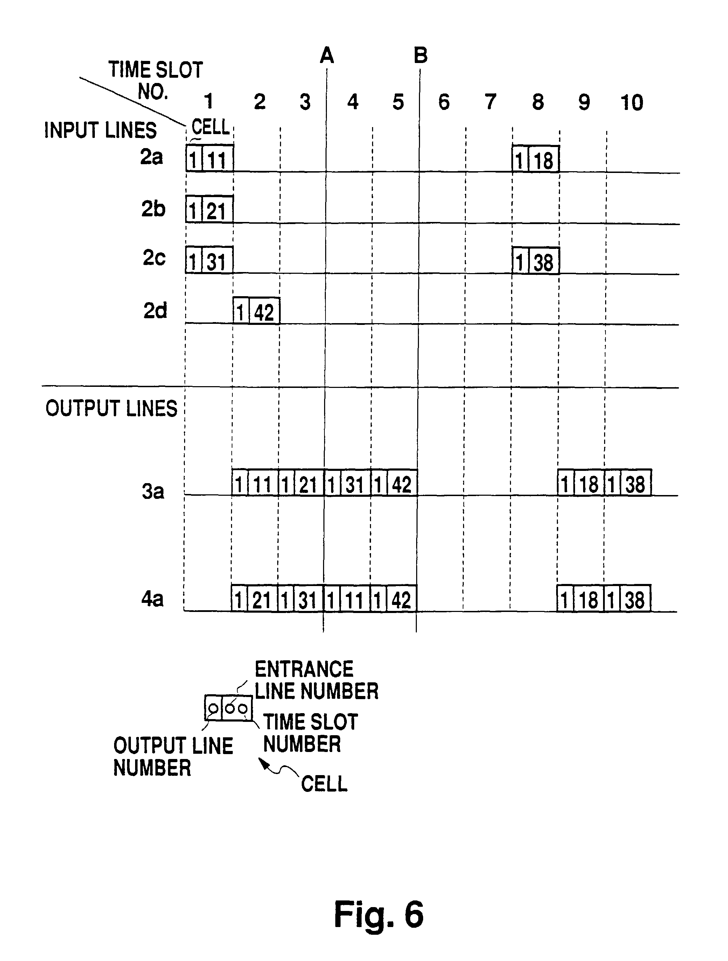

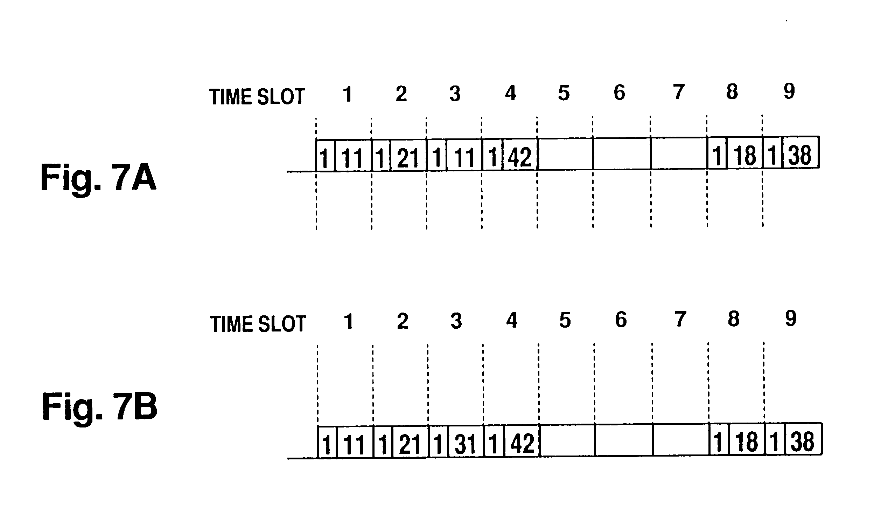

The operation of the selector 5a will now be explained. The case of switching the cell switch 11, which is currently used, over to the cell switch 12 will be explained with reference to Figs. 6 and 7. Fig. 6 is a timing chart for signals which are input from the input lines 2a to 2d and output to the output line 3a of cell switch 11 and output line 4a of cell switch 12. The input cells are exchanged by the cell switches 11 and 12 so that the cells are output to output lines 3a and 4a. In Fig. 6, the cell received on input line 2a is output to the output line 3a, whereas the cell received on input line 2b is output on the output line 4a during time slot 2.

The cell switches 11 and 12 exchange cells on the basis of the same control algorithm, but since the internal states of the cell switches 11 and 12 are not always the same, the order of outputting cells in cell switch 11 is sometimes different from the order in the cell switch 12, as shown in Fig. 6 (i.e., note the order in which the cells "111", "121", and "131" are output on output lines 3a and 4a). In this case, if a changeover to system #2 occurs at time A in Fig. 6, a cell is duplicated or missed, as shown in Fig. 7A.

However, if the changeover to system #2 occurs at time B in Fig. 6, no cell is duplicated or missed, as shown in Fig. 7B. This is because the order of outputting cells having an idle cell therebetween is not changed, as described above.

Therefore, when the selector 5a (Fig. 3) which is connected to the output lines 3a and 4a receives a system change-over signal, the selector 5a instructs the selection circuit 8 to switch after the idle cell detector 7 detects an idle cell which is output to the output lines of both systems at time B in Fig. 6. It is, thus, possible to switch systems without duplicating or missing a cell. The selectors 5a to 5m (see Fig. 2) switch the systems in this way independently of each other. Therefore, the operation of switching the systems in the entire ATM cell exchanging apparatus as a whole is completed when all the selectors 5a to 5m have finished the switching operation.

### DETAILED DESCRIPTION OF THE PREFERRED EMBODIMENTS

### First embodiment:

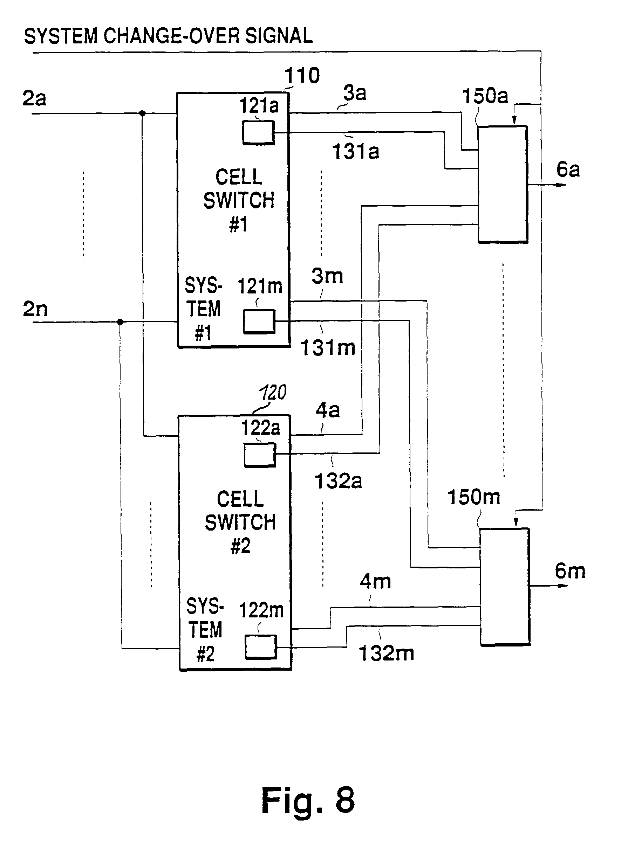

A cell exchanging apparatus according to a first embodiment of the invention is described in conjunction with Fig. 8.

Fig. 8 is a block diagram showing the configuration of the cell exchanging apparatus according to the first embodiment of the invention, wherein 2a-2n, 3a-3m, 4a-4m, and 6a-6m are input lines and output lines, as in the apparatus shown in Fig. 2. A cell switch 110 (#1) contains cell monitors 121a-121m; a cell switch 120 (#2) contains cell monitors 122a-122m, as a feature of the cell exchanging apparatus according to the first embodiment. Each of the cell monitors 121a-121m and 122a-122m monitors the output state of a cell to each of switch output lines 3a-3m and 4a-4m, and outputs the monitor result as a cell presence/absence signal to each of cell presence/absence signal lines 131a-131m and 132a-132m. If a cell is output, the cell presence/absence signal indicates "cell presence"; if no cell is output, the signal indicates "cell absence".

Unlike the selectors 5a-5m of the apparatus shown in Fig. 2, selectors 150a-150m used with the first embodiment have a simplified monitor mechanism. Instead, the cell monitors 121a-121m and 122a-122m in the cell switches 110 (#1) and 120 (#2) report the monitor results to the selectors 150a-150m. That is, the selectors 150a-150m of the first embodiment do not contain an idle cell detection circuit, and selection circuits are controlled in response to the cell presence/absence signals to the selectors 150a-150m.

The operation of the cell exchanging apparatus according to the first embodiment is the same as that according to the apparatus of Fig. 2. In the first embodiment, after a change-over is instructed by a system change-over signal, the selectors 150a-150m are responsive to the cell presence/absence signals output by the cell monitors 121a-121m and 122a-122m for judging the timing at which an actual change-over can be performed. Entire change-over of the cell switches is completed upon termination of changing over at all the output selectors.

Idle cells are detected by the output selectors or the cell monitors in the cell switches in the first embodiment, but may be detected elsewhere in the cell exchanging apparatus.

### Second embodiment:

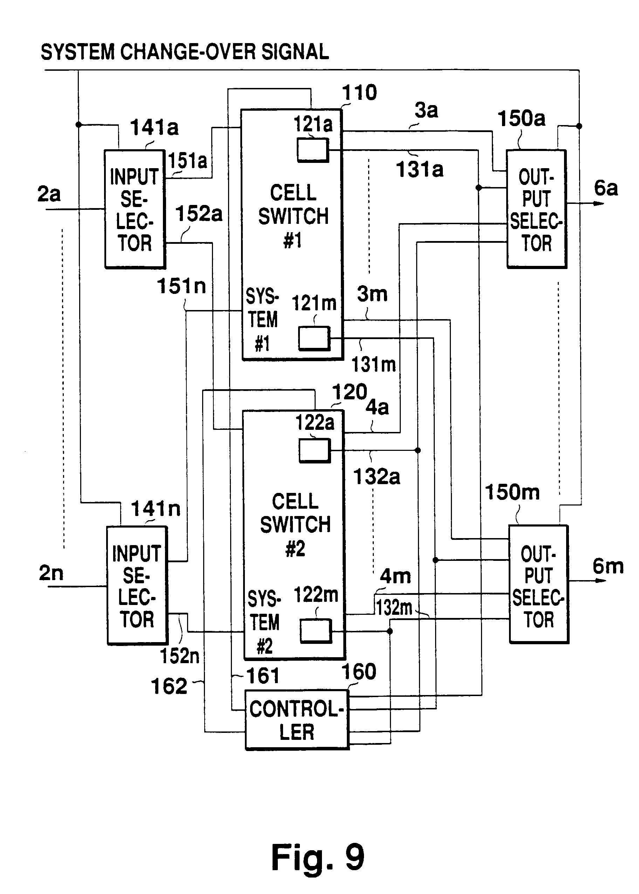

Next, a cell exchanging apparatus according to a second embodiment of the invention is described in conjunction with Fig. 9.

Fig. 9 is a block diagram showing the configuration of the cell exchanging apparatus according to the second embodiment of the invention, wherein the cell exchanging apparatus contains cell switches 110 (#1) and 120 (#2) for exchanging input cells based on their destination information. Each of the cells consists of a header section containing an output line number as destination information and a data section containing data to be transmitted.

In the second embodiment, each of the cell switches 110 (#1) and 120 (#2) has a buffer memory for each switch output line. The buffer memory is an output buffer for once storing cells before they are output to the switch output line corresponding to the buffer memory. The cell switch having such output buffers is called an output buffer type switch. The cell switch 110 (#1) operates as an active system and the cell switch 120 (#2) operates as a standby system. Input lines 2a-2n of the cell exchanging apparatus according to the second embodiment are connected to input selectors 141a-141n respectively. Output signals of the input selectors 141a-141n are connected to 151a-151n and 152a-152n, switch input lines of the cell switches 110 (#1) and 120 (#2).

Switch output lines 3a-3m and 4a-4m, cell exchanging apparatus output lines 6a-6m, and output selectors 150a-150m are the same as those used with the first embodiment. Also, cell monitors 121a-121m and 122a-122m and cell presence/absence signal lines 131a-131m and 132a-132m are the same as those used with the first embodiment.

The cell exchanging apparatus according to the second embodiment further includes a controller 160 which grants cell output permission to the cell switch 110 (#1) or 120 (#2) for each switch output line. The output permission signals are fed on output permission signal lines 161 and 162 to the cell switches 110 (#1) and 120 (#2).

Next, the operation of the cell exchanging apparatus is described for changing over the cell switch 120 (#2) to the active system when the cell switches 110 (#1) and 120 (#2) serve as the active system and standby system respectively.

First, when the cell switch 110 (#1) serves as the active system, the controller 160 grants cell output permission to the cell switch 110 (#1). Cells arriving at the cell exchanging apparatus input lines 2a-2n are output through the input selectors 141a-141n to the switch input lines 151a-151n. Resultantly, the cells are input to the cell switch 110 (#1). The cell switch 110 (#1) performs the same operation as the cell switch 110 (#1) in the second embodiment for outputting the cells to the cell output lines 3a-3n. The cells output from the cell switch 110 are fed into the output selectors 150a-150m through which the cells are output to the cell exchanging apparatus output lines 6a-6m.

On the other hand, the cell switch 120 is in the standby mode.

In the state, if a system change-over signal is entered indicating that the cell switch serving as the active system is to be changed from cell switch 110 to 120, the following operation is started. First, the input selectors 141a-141n select the switch input lines 152a-152n. Resultantly, the cells input to the input selectors are all sent to the cell switch 120 (#2) and not sent to the cell switch 110 (#1).

The cell switch 120 (#2) performs the same processing as the cell switch 110 (#1) for the input cells except that the buffer memories of the cell switch 120 store the cells without outputting them because the cell switch 120 does not yet receive a cell output permission signal from the controller 160. Each of the buffer memories is an output buffer provided for each switch output line of the cell switches 110 (#1) and 120 (#2) for storing the cells to be output to the output line corresponding to the buffer. On the other hand, after the system change-over signal was entered, the cell switch 110 (#1) still continues to output cells to the switch output lines until the cells stored in the output buffers of the cell switch 110 are out.

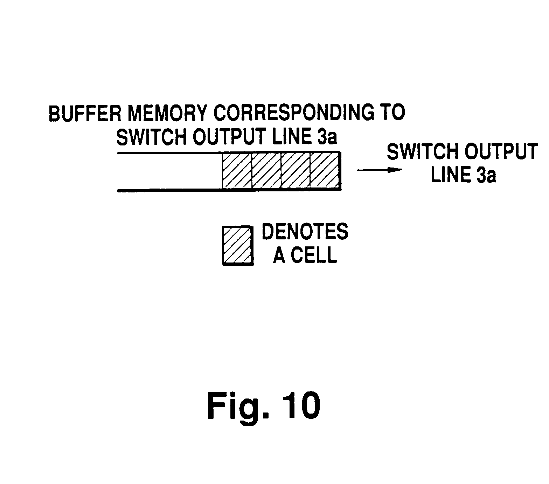

For example, when the system change-over signal is entered and feeding cells into the cell switch 120 (#2) is started, if four cells are stored in the buffer memory corresponding to the switch output line 3a of the cell switch 110 (#1) as shown in Fig. 10, the cell switch 110 (#1) outputs the cells in sequence. On the other hand, the cells which are input to the cell switch 120 (#2) for output to the switch output line 4a are stored in the buffer memory corresponding to the output line 4a.

When all the cells stored in the cell switch 110 (#1) have been output, the cell presence/absence signal output through the cell presence/absence signal line 131a is set to a value representing "cell absence" for informing the output selector 150a and the controller 160 that the cells to be output have gone. Then, the output selector 150a selects the switch output line 4a instead of the switch output line 3a and the controller 160 sends a cell output permission signal to the cell switch 120 (#2) on the cell output permission signal line 162 for enabling the cells to be output through the switch output line 4a. Resultantly, the cell switch 120 (#2) starts to output the cells over the switch output line 4a.

Thus, a change-over is made for each switch output line in sequence, and entire change-over of the cell switches is completed upon termination of changing over all the switch output lines.

### Third embodiment:

The second embodiment uses so-called output buffer type ATM switches having a buffer memory for each switch output line as the cell switches 110 (#1) and 120 (#2).

However, it is also preferable that the cell switch contains a buffer memory shared by the switch output lines. In this case, the cell switch can be operated like the output buffer type ATM switch by managing the addresses of the buffer memory into which cells are written. The cell switch having such a shared buffer memory is called a "shared buffer type ATM cell switch."

When the shared buffer type ATM cell switch is used, the cell presence/absence monitor function monitors the buffer memory addresses managed for each output line.

### Fourth embodiment:

The first embodiment uses so-called output buffer type ATM switches for the cell switches.

However, use of the "shared buffer type ATM cell switches" is also preferable, as in the third embodiment.

## Claims

1. An asynchronous transfer mode (ATM) cell exchanging apparatus for inputting through n input lines (2a-2n), cells each having a data section containing data to be transmitted and a header section containing destination information and distributing the cells by destination for outputting to m output lines (6a-6m), the ATM cell exchanging apparatus comprising:
first switch means (110) for distributing cells input through a first group of n switch input lines (2a-2n) by destination in response to the destination information for directing the cells to a first group of m switch output lines (3a-3m), the first switch means (110) comprising a first group of m output buffers (30a) which temporarily store the distributed cells by destination;
second switch means (120) for distributing cells input through a second group of n switch input lines (2a-2n) by destination in response to the destination information for directing the cells to a second group of m switch output lines (4a-4m), the second switch means (120) comprising a second group of m output buffers (30b) which temporarily store the destritubed cells by destination; and m output selectors (150a-150n) each being provided for each of the output lines (6a-6m) for selecting its corresponding switch output line of the first group (3a-3m) or that of the second group (4a-4m) in response to a change-over signal to send cells output through the selected switch output line to the corresponding output line,
**characterized in that**
the first switch means (110) being provided for outputting idle cells to the first group of switch output lines (3a-3m) if cells to be output do not exist, the first switch means (110) further comprising a first group of m cell monitors (121a-121m) each being provided for each of the first group of m switch output lines (3a-3m) for determining which of a normal cell and a idle cell is output to its corresponding switch output line and outputting a cell presence/absence signal specifying whether or not a normal cell exists,
that the second switch means (120) being provided for outputting idle cells to the second group of switch output lines (4a-4m) if cells to be output do not exist, the second switch means (120) further comprising a second group of m cell monitors (122a-122m) each being provided for each of the second group of m switch output lines (4a-4m) for determining which of a normal cell and an idle cell is output to its corresponding switch output line and outputting a cell presence/absence signal specifying whether or not a normal cell exists; and
that each of the output selectors (150a-150m) includes output selector control means for monitoring a cell presence/absence signal output by the cell monitor (121a-121m, 122a-122m) provided corresponding to said switch output line (3a-3m, 4a-4m) of the group selected by the output selector (150a-150m) to change over the switch output line (3a-3m,4a-4m) in response to the change-over signal only if the cell presence/absence signal indicates "cell absence",
wherein n and m are positive integers.

2. An asynchronous transfer mode (ATM) cell exchanging apparatus for inputting through n input lines (2a-2n), cells each having a data section containing data to be transmitted and a header section containing destination information and distributing the cells by destination for outputting to m output lines (6a-6m), the ATM cell exchanging apparatus comprising:
first switch means (110) for distributing cells input through a first group of n switch input lines (151a-151n) by destination in response to the destination information for directing the cells to a first group of m switch output lines (3a-3m), the first switch means (110) comprising a first group of m output buffers (30a) which temporarily store the distributed cells by destination;
second switch means (120) for distributing cells input through a second group of n switch input lines (152a-152n) by destination in response to the destination information for directing the cells to a second group of m switch output lines (4a-4m), the second switch means (120) comprising a second group of m output buffers (30b) which temporarily store the distributed cells by destination; and
output selectors (150a-150m) for selecting the first (3a-3m) or second (4a-4m) group of m switch output lines in response to a change-over signal to send cells output through the selected group of switch output lines to said output lines (6a-6m),
**characterized in that**
input selectors (141a-141n) are provided which are responsive to a change-over signal for directing cells input through the n input lines (2a-2n) to either a first or second group of n switch input lines (151a-151n, 152a-152n);
that the first switch means being provided for outputting idle cells to said first group of switch output lines if cells to be output do not exist, the first switch means (110) further comprising a first group of m cell monitors (121a-121m) each being provided for each of the first group of m switch output lines (3a-3m) for determining whether or not a cell is output to its corresponding switch output line and outputting a cell presence/absence signal specifying whether or not a cell exists;
that the second switch means (120) being provided for outputting idle cells to the second group of switch output lines (4a-4m) if cells to be output do not exist, the second switch means (120) further comprising a second group of m cell monitors (122a-122m) each being provided for each of the second group of m switch output lines (4a-4m) for determining whether or not a cell is output to its corresponding switch output line and outputting a cell presence/absence signal specifying whether or not a cell exists;
that each of said output selectors (150a-150m) including:
an output unit selector being provided for each of the m output lines (6a-6m) for selecting one switch output line of a pair of switch output lines of the first (3a-3m) and second (4a-4m) groups and connecting the selected switch output line to the output line corresponding to the output unit selector; and
output selector control means for monitoring a cell presence/absence signal output by the cell monitor provided corresponding to the switch output line of the group to which the output unit selector is connected to change over the switch output line in response to the change-over signal only if the cell presence/absence signal indicates "cell absence";
and
that a controller (160) is provided being responsive to a change-over signal for granting cell output permission only to either the first (110) or second (120) switch means, when "cell absence" is indicated by one or more output signals of the cell monitors (121a-121m, 122a-122m) provided for one switch means (110,120), then granting cell output permission for the corresponding one or more output lines (6a-6m) to the other switch means (110,120), wherein n and m are positive integers.

3. The ATM cell exchanging apparatus as claimed in claim 1 or claim 2 wherein each of said first and second groups of output buffers is a shared buffer memory.

## Patentansprüche

1. Asynchrone Transfer Mode (ATM) - Zellenvermittlungseinrichtung zur Eingabe von Zellen über n Eingangsleitungen (2a-2n), wobei jede einen zu übermittelnde Daten enthaltenden Datenabschnitt und einen Ziel informationen enthaltenden Kopfabschnitt aufweist, und zur Verteilung der Zellen nach ihrer Zielbestimmung durch Ausgabe auf m Ausgangsleitungen (6a-6m), wobei die ATM Zellenvermittlungseinrichtung umfaßt:
eine erste Schalteinrichtung (110) zur Verteilung von über eine erste Gruppe von n Schalt-Eingangsleitungen (2a-2n) eingegebenen Zellen entsprechend der Zielbestimmung abhängig von den Zielinformationen und zum Leiten der Zellen zu einer ersten Gruppe von m Schalt-Ausgabeleitungen (3a-3m),
wobei die erste Schalteinrichtung (110) eine erste Gruppe von m Ausgabe-Puffern (30a) enthält, die vorübergehend die verteilten Zellen nach ihrer Zielbestimmung abspeichern;
eine zweite Schalteinrichtung (120) zur Verteilung von der über eine zweite Gruppe von n Schalt-Eingangsleitungen (2a-2n) eingegebenen Zellen entsprechend der Zielbestimmung abhängig von den Ziel informationen und zum Leiten der Zellen zu einer zweiten Gruppe von m Schalt-Ausgabeleitungen (4a-4m),
wobei die zweite Schalteinrichtung (120) eine zweite Gruppe von m Ausgabe-Puffern (30b) enthält, die vorübergehend die verteilten Zellen nach ihrer Zellbestimmung abspeichern; und m Ausgabe-Auswahleinrichtungen (150a-150n), jede für jede der Ausgangsleitungen (6a-6m) vorgesehen, zur Auswahl ihrer entsprechenden Schalt-Ausgabeleitung der ersten Gruppe (3a-3m) oder der der zweiten Gruppe (4a-4m) abhängig von einem Wechselsignal, um die über die ausgewählte Schalt-Ausgabeleitung ausgegebenen Zellen zu der entsprechenden Ausgangsleitung zu senden,
dadurch **gekennzeichnet ,**
daß die erste Schalteinrichtung (110) zur Ausgabe von Leerzellen an die erste Gruppe von Schalt-Ausgabeleitungen (3a-3m) vorgesehen ist, falls auszugebende Zellen nicht vorhanden sind, wobei die erste Schalteinrichtung (110) weiter eine erste Gruppe von m Zellen-Überwachungseinrichtungen (121a-121m) enthält, die jeweils für jede der m Schalt-Ausgabeleitungen (3a-3m) der ersten Gruppe vorgesehen sind, um zu bestimmen, ob eine normale Zelle oder eine Leerzelle an ihre entsprechende Schalt-Ausgabeleitung ausgegeben wird, und um ein Zellen-anwesend/abwesend-Signal anzugeben, das spezifiziert, ob eine normale Zelle vorliegt oder nicht,
daß die zweite Schalteinrichtung (120) zur Ausgabe von Leerzellen an die zweite Gruppe der Schalt-Ausgabeleitungen (4a-4m) vorgesehen ist, falls auszugebende Zellen nicht vorhanden sind, wobei die zweite Schalteinrichtung (120) weiter eine zweite Gruppe von m zellen-Überwachungseinrichtungen (122a-122m) enthält, die jeweils für jede der m Schalt-Ausgabeleitungen (4a-4m) der zweiten Gruppe, um zu bestimmen, ob eine normale Zelle oder eine Leerzelle an ihre entsprechende Schalt-Ausgabeleitungen ausgegeben wird, und um ein Zellen-anwesend/abwesend-Signal auszugeben, das spezifiziert, ob eine normale Zelle vorhanden ist oder nicht,
und
daß jede der Ausgabe-Auswahleinrichtungen (150a-150m) eine Ausgabe-Auswahleinrichtung-Steuereinrichtung zur Überwachung eines Zellen-anwesend/abwesend-Signals einschließt, das von der Zellen-Überwachungseinrichtung (121a-121m, 122a-122m) ausgegeben wird, die entsprechend der Schalt-Ausgabeleitung (3a-3m, 4a-4m) der durch die Ausgabe-Auswahleinrichtung (150a-150m) ausgewählten Gruppe vorgesehen ist, um die Schalt-Ausgabeleitung (3a-3m, 4a-4m) abhängig vom Wechselsignal nur zu wechseln, wenn das Zellenanwesend/abwesend-Signal eine "Zellen-Abwesenheit" anzeigt, wobei n und m positive Integer-Zahlen sind.

2. Asynchrone Transfer Mode (ATM) - Zellenvermittlungseinrichtung zur Eingabe von Zellen über n Eingabeleitungen (2a-2n), wobei jede einen zu übermittelnde Daten enthaltenden Datenabschnitt und einen Ziel informationen enthaltenden Kopfabschnitt aufweist und zur Verteilung der Zellen nach ihrer Zielbestimmung durch Ausgabe auf m Ausgangsleitungen (6a-6m), wobei die ATM Zellenvermittlungseinrichtung umfaßt:
eine erste Schalteinrichtung (110) zur Verteilung der über eine erste Gruppe von n Schalt-Eingangsleitungen (151a-151n) eingegebenen Zellen entsprechend der Zielbestimmung abhängig von den Zielinformationen, um die Zellen einer ersten Gruppe von m Schalt-Ausgabeleitungen (3a-3m) zuzuleiten, wobei die erste Schalteinrichtung eine erste Gruppe von m Ausgabe-Puffern (30a) umfaßt, welche vorübergehend die verteilten Zellen nach ihrer Zielbestimmung speichern;
eine zweite Schalteinrichtung (120) zur Verteilung von über eine zweite Gruppe von n Schalt-Eingangsleitungen (152a-152n) eingegebenen Zellen entsprechend der Zielbestimmung abhängig von den Zielinformationen, um die Zellen einer zweiten Gruppe von m Schalt-Ausgabeleitungen (4a-4m) zuzuleiten,
wobei die zweite Schalteinrichtung (120) eine zweite Gruppe von m Ausgabe-Puffern (30b) umfaßt, die vorübergehend die verteilten Zellen nach ihrer Zielbestimmung speichern; und Ausgabe-Auswahleinrichtungen (150a-150m) zur Auswahl der ersten (3a-3m) oder zweiten (4a-4m) Gurppe von m Schalt-Ausgabeleitungen abhängig von einem Wechselsignal, um die über die ausgewählte Gruppe von Schalt-Ausgabeleitungen ausgegebenen Zellen zu den Ausgangsleitungen (6a-6m) zu senden,
dadurch **gekennzeichnet,**
daß Eingabe-Auswahleinrichtungen (141a-141n) vorgesehen sind, die auf ein Wechselsignal reagieren, um über die n Eingangsleitungen (2a-2n) eingegebenen Zellen jeweils einer ersten oder zweiten Gruppe von n Schalt-Eingabeleitungen (151a-151n, 152a-152n) zuzuleiten;
daß die erste Schalteinrichtung zur Ausgabe von Leerzellen an die erste Gruppe der Schalt-Ausgabeleitungen vorgesehen ist, falls auszugebende Zellen nicht vorhanden sind, wobei die erste Schalteinrichtung (110) weiter eine erste Gruppe von m Zellen-Überwachungseinrichtungen (121a-121m) umfaßt, die jeweils für jede der m Schalt-Ausgabeleitungen (3a-3m) der ersten Gruppe vorgesehen sind, um festzustellen, ob eine Zelle zu ihrer entsprechenden Schalt-Ausgabeleitung ausgegeben wird oder nicht und um eine Zellenanwesend/abwesend-Signal auszugeben, das spezifiziert, ob eine Zelle vorhanden ist oder nicht;
daß die zweite Schalteinrichtung (120) zur Ausgabe von Leerzellen an eine zweite Gruppe von Schalt-Ausgabeleitungen (4a-4m), falls auszugebende Zellen nicht vorhanden sind vorgesehen ist, wobei die zweite Schalteinrichtung (120) weiter eine zweite Gruppe von zellen-Überwachungseinrichtungen (122a-122m) umfaßt, die jeweils für jede der m Schaltausgabeleitungen (4a-4m) der zweiten Gruppe, vorgesehen sind, um zu bestimmen, ob eine Zelle an ihre entsprechende Schalt-Ausgabeleitung ausgegeben wird oder nicht und um ein Zellen-anwesend/abwesend-Signal auszugeben, das spezifiert, ob eine Zelle vorhanden ist oder nicht;
daß jede der Ausgabe-Auswahleinrichtungen (150a-150m) enthält:
eine Ausgabeeinheit-Auswahleinrichtung, die für jede der m Ausgangsleitungen (6a-6m) vorgesehen ist zur Auswahl einer Schalt-Ausgabeleitung aus einem Paar von Schalt-Ausgabeleitungen der ersten (3a-3m) und der zweiten (4a-4m) Gruppe und zur Verbindung der ausgewählten Schalt-Ausgabeleitung mit der Ausgangsleitung entsprechend der Ausgabeeinheit-Auswahleinrichtung; und
eine Ausgabe-Auswahleinrichtung-Steuereinrichtungen zur Überwachung eines von der Zellenüberwachungseinrichtung ausgebenen Zellenanwesend/abwesend-Signals, die entsprechend der Schalt-Ausgabeleitung der Gruppe vorgesehen ist, mit der die Ausgabeeinheit-Auswahleinrichtung verbunden ist, um die Schalt-Ausgabeleitung abhängig von dem Wechselsignal nur zu wechseln, falls das Zellen-abwesend/anwesend-Signal eine "Zellen-Abwesenheit" anzeigt; und
daß ein Regler (160) vorgesehen ist, der auf ein Wechselsignal reagiert, um eine Freigabe der Zellenausgabe nur an die erste (110) oder zweite (120) Schalteinrichtung zu gestatten, wenn eine "Zellen-Abwesenheit" durch ein oder mehrere Signale der Zellen-Überwachungseinrichtungen (121-121m, 122a-122m), vorgesehen für eine Schalteinrichtung (110, 120) angezeigt wird, um dann die Zell-Ausgabe freigibt, für eine oder mehrere Ausgabeleitungen (6a-6m) (110, 120), wobei n und m positive Integer-Zahlen sind.

3. Die ATM Zellenvermittlungseinrichtungen nach Anspruch 1 oder Anspruch 2, wobei jeder der Ausgabe-Puffer der ersten und zweiten Gruppe einen Pufferspeicher sich teilen.

## Revendications

1. Appareil d'échange de cellule en mode de transfert asynchrone (ATM) pour introduire, par l'intermédiaire de n lignes d'entrée (2a - 2n), des cellules ayant chacune une section de données contenant des données à transmettre et une section d'en-tête contenant une information de destination et pour répartir les cellules par destination pour une délivrance à m lignes de sortie (6a - 6m), l'appareil d'échange de cellule ATM comprenant :
un premier moyen (110) de commutation pour répartir des cellules introduites par l'intermédiaire d'un premier groupe de n lignes (2a - 2n) d'entrée de commutation, par destination, en réponse à l'information de destination pour diriger les cellules vers un premier groupe de m lignes (3a - 3m) de sortie de commutation, le premier moyen (110) de commutation comprenant un premier groupe de m tampons de sortie (30a) qui stockent temporairement les cellules réparties par destination ;
un deuxième moyen (120) de commutation pour répartir des cellules introduites par l'intermédiaire d'un deuxième groupe de n lignes (2a - 2n) d'entrée de commutation, par destination, en réponse à l'information de destination pour diriger les cellules vers un deuxième groupe de m lignes (4a - 4m) de sortie de commutation, le deuxième moyen (120) de commutation comprenant un deuxième groupe de m tampons de sortie (30b) qui stockent temporairement les cellules réparties par destination ; et m sélecteurs de sortie (150a - 150n), chacun étant prévu pour chacune des lignes de sortie (6a - 6m) pour sélectionner sa ligne de sortie de commutation correspondante du premier groupe (3a - 3m) ou celle du deuxième groupe (4a - 4m) en réponse à un signal d'inversion pour envoyer des cellules, délivrées par l'intermédiaire de la ligne de sortie de commutation sélectionnée, vers la ligne de sortie correspondante,
caractérisé en ce que le premier moyen (110) de commutation est prévu pour délivrer des cellules inactives au premier groupe de lignes (3a - 3m) de sortie de commutation si des cellules à délivrer n'existent pas, le premier moyen (110) de commutation comprenant en outre un premier groupe de m dispositifs (121a - 121m) de surveillance de cellule, chacun étant prévu pour chacune du premier groupe de m lignes (3a - 3m) de sortie de commutation pour déterminer laquelle d'une cellule normale et d'une cellule inactive est délivrée à sa ligne de sortie de commutation correspondante et pour délivrer un signal de présence/absence de cellule spécifiant si une cellule normale existe ou non,
en ce que le deuxième moyen (120) de commutation est prévu pour délivrer des cellules inactives au deuxième groupe de lignes (4a - 4m) de sortie de commutation si des cellules à délivrer n'existent pas, le deuxième moyen (120) de commutation comprenant en outre un deuxième groupe de m dispositifs (122a - 122m) de surveillance de cellule, chacun étant prévu pour chacune du deuxième groupe de m lignes (4a - 4m) de sortie de commutation pour déterminer laquelle d'une cellule normale et d'une cellule inactive est délivrée à sa ligne de sortie de commutation correspondante et pour délivrer un signal de présence/absence de cellule spécifiant si une cellule normale existe ou non ; et
en ce que chacun des sélecteurs de sortie (150a - 150m) comporte un moyen de commande de sélecteur de sortie pour surveiller un signal de présence/absence de cellule délivré par le dispositif (121a - 121m, 122a - 122m) de surveillance de cellule prévu en correspondance avec ladite ligne (3a - 3m, 4a - 4m) de sortie de commutation du groupe sélectionné par le sélecteur de sortie (150a - 150m) pour inverser la ligne (3a - 3m, 4a - 4m) de sortie de commutation en réponse au signal d'inversion, uniquement si le signal de présence/absence de cellule indique « absence de cellule »,
dans lequel n et m sont des entiers positifs.

2. Appareil d'échange de cellule en mode de transfert asynchrone (ATM) pour introduire, par l'intermédiaire de n lignes d'entrée (2a - 2n), des cellules ayant chacune une section de données contenant des données à transmettre et une section d'en-tête contenant une information de destination et pour répartir les cellules par destination pour une délivrance à m lignes de sortie (6a - 6m), l'appareil d'échange de cellule ATM comprenant :
un premier moyen (110) de commutation pour répartir des cellules introduites par l'intermédiaire d'un premier groupe de n lignes (151a - 151n) d'entrée de commutation, par destination, en réponse à l'information de destination pour diriger les cellules vers un premier groupe de m lignes (3a - 3m) de sortie de commutation, le premier moyen (110) de commutation comprenant un premier groupe de m tampons de sortie (30a) qui stockent temporairement les cellules réparties par destination ;
un deuxième moyen (120) de commutation pour répartir des cellules introduites par l'intermédiaire d'un deuxième groupe de n lignes (152a - 152n) d'entrée de commutation, par destination, en réponse à l'information de destination pour diriger les cellules vers un deuxième groupe de m lignes (4a - 4m) de sortie de commutation, le deuxième moyen (120) de commutation comprenant un deuxième groupe de m tampons de sortie (30b) qui stockent temporairement les cellules réparties par destination ; et
des sélecteurs (150a - 150m) de sortie pour sélectionner le premier (3a - 3m) ou le deuxième (4a - 4m) groupe de m lignes de sortie de commutation en réponse à un signal d'inversion pour envoyer des cellules délivrées par l'intermédiaire du groupe sélectionné de lignes de sortie de commutation vers lesdites lignes de sortie (6a - 6m),
caractérisé en ce que des sélecteurs (141a - 141n) d'entrée sont prévus qui sont sensibles à un signal d'inversion pour diriger des cellules introduites par l'intermédiaire des n lignes d'entrée (2a - 2n) vers l'un d'un premier ou d'un deuxième groupe de n lignes (151a - 151n, 152a - 152n) d'entrée de commutation,
en ce que le premier moyen de commutation est prévu pour délivrer des cellules inactives audit premier groupe de lignes de sortie de commutation si des cellules à délivrer n'existent pas, le premier moyen (110) de commutation comprenant en outre un premier groupe de m dispositifs (121a - 121m) de surveillance de cellule, chacun étant prévu pour chacune du premier groupe de m lignes (3a - 3m) de sortie de commutation pour déterminer si une cellule est ou non délivrée à sa ligne de sortie de commutation correspondante et pour délivrer un signal de présence/absence de cellulle spécifiant si une cellule existe ou non ;
en ce que le deuxième moyen (120) de commutation est prévu pour délivrer des cellules inactives au deuxième groupe de lignes (4a - 4m) de sortie de commutation si des cellules à délivrer n'existent pas, le deuxième moyen (120) de commutation comprenant en outre un deuxième groupe de m dispositifs (122a - 122m) de surveillance de cellule, chacun étant prévu pour chacune du deuxième groupe de m lignes (4a - 4m) de sortie de commutation pour déterminer si une cellule est ou non délivrée à sa ligne de sortie de commutation correspondante et pour délivrer un signal de présence/absence de cellule spécifiant si une cellule existe ou non ;
en ce que chacun desdits sélecteurs de sortie (150a - 150m) comporte :
un sélecteur d'unité de sortie prévu pour chacune des m lignes de sortie (6a - 6m) pour sélectionner une ligne de sortie de commutation d'une paire de lignes de sortie de commutation des premier (3a - 3m) et deuxième (4a - 4m) groupes et pour connecter la ligne de sortie de commutation sélectionnée à la ligne de sortie correspondant au sélecteur d'unité de sortie ; et
un moyen de commande de sélecteur de sortie pour surveiller un signal de présence/absence de cellule délivré par le dispositif de surveillance de cellule prévu en correspondance avec la ligne de sortie de commutation du groupe auquel le sélecteur d'unité de sortie est connecté, pour inverser la ligne de sortie de commutation en réponse au signal d'inversion, uniquement si le signal de présence/absence de cellule indique « absence de cellule » ;
et en ce qu'un dispositif de commande (160) est prévu, sensible à un signal d'inversion, pour garantir une autorisation de délivrance de cellule, uniquement à l'un ou l'autre du premier (110) ou du deuxième (120) moyen de commutation, lorsque « absence de cellule » est indiqué par un ou plusieurs signaux de sortie des dispositifs (121a - 121m, 122a - 122m) de surveillance de cellule prévus pour un moyen de commutation (110, 120), garantissant ensuite une autorisation de délivrance de cellule pour une ou plusieurs des lignes de sortie correspondantes (6a - 6m) à l'autre moyen de commutation (110, 120), n et m étant des entiers positifs.

3. Appareil d'échange de cellule ATM selon la revendication 1 ou la revendication 2, dans lequel chacun desdits premier et deuxième groupes de tampons de sortie est une mémoire tampon partagée.
